# EUROPEAN PATENT APPLICATION

(11) **EP 2 328 374 A1**
(43) Date of publication of application: **01.06.2011**
(21) Application number: 09306155.4
(22) Date of filing: 30.11.2009
(51) Int. Cl.: H04W 28/08, H04W 72/04, H04W 84/18, H04W 28/12

(54) **Method for managing resource allocation in a mesh network, corresponding link group coordinator and network node**

(71) Applicant: Alcatel Lucent, 75008 Paris (FR)
(72) Inventor: Gloss, Bernd, 70569, Stuttgart (DE)
(74) Representative: Wetzel, Emmanuelle

(57) **Abstract**

The present invention relates to a method for managing resource allocation in a mesh network comprising nodes and links between said nodes, preferably at least a part of said links being wireless links, said mesh network comprising at least one link group comprising links between a predefined set of nodes, one node of said link group acting as link group coordinator (4) .

According to the present invention, the method comprises the steps of:
- keeping track at said link group coordinator (4) of resources used on said links inside said link group;
- signalling by said link group coordinator (4) to said nodes inside said link group at least one link group load parameter;
- upon overload situation in said group link, performing overload management by said nodes based on said at least one link group load parameter.

## Description

### BACKGROUND OF THE INVENTION

The present invention relates to the field of telecommunication, and more specifically to a method for managing resource allocations in a mesh network.

This section introduces aspects that may be helpful in facilitating a better understanding of the invention. Accordingly, the statements of this section are to be read in this light and are not to be understood as admissions about what is in the prior art or what is not in the prior art.

A mesh network is used for transporting mesh flows, i.e. flows of packets having a unique source and destination node, along fixed paths established between nodes of the network. A path established for such a mesh flow is realized by combining multiple subsequent single-hop transmissions between neighboring mesh nodes, the single-hop transmissions being implemented using wireless or wire-line links, in the following also being referred to as mesh links. Packet forwarding at the mesh relay nodes, i.e., mesh points, is realized based on local packet forwarding information, for example based on label-switching after performing a setup-process of mesh flows.

Although mesh networks are characterized by their high decentralized nature and most of the time by a best effort approach for forwarding data, it is the intention to develop carrier-grade mesh networks which support traffic engineering mechanisms, such as provision of quality of services inside the mesh networks based on agreed service levels.

The major application areas of such carrier-grade mesh networks are (1) extending radio access networks on a temporary basis for coverage or capacity, e.g., by adding small cells with in-band backhauling and (2) to run temporary communication systems for rescue operations in environments with a broken infrastructure, e.g., after an earth-quake, hurricane or tsunami catastrophes. Supporting a heterogeneous set of link technologies which are integrated into the same mesh network is a requirement in scenarios where different spatial environments have to be traversed with mesh links. Different wireless or wire-line link technologies are typically tailored to different environments as indoor/outdoor and, in the case of wireless link technologies, simple or difficult radio interference situations.

As wireless (and wire-line) resources are scarce resources - especially since in mesh networks they are also used for backhauling traffic of other links/cells - resource management mechanisms have to be applied in order to avoid network congestions and in order to provide communication services based on agreed service levels. Thus, for providing predictable communication services in mesh networks, an appropriate resource management for wireless and/or wire-line resources has to be established.

Such a mesh resource management has to be adapted for performing admission control of new mesh flows and for mesh optimizations which re-arrange already established mesh flows inside the mesh network. Admission control decisions (whether to accept new mesh flows or not) are based on calculations of remaining link capacities and calculations of expected flow traffic performance measures. The mesh routing / admission control may do this for different potential paths and selects the best path, if such a path can be established without violating capacity bounds and service quality constraints, e.g., delay, and without interfering with other flows breaking their service level agreements. If these constraints are violated, a request for establishing a new mesh flow on the network will be rejected. When accepting a new mesh flow, the path is configured and possibly resource reservations at the link level are made.

Especially, meshed networks comprising at least partly wireless links are facing temporarily bad radio conditions which result in change on the quality of service which can be provided if no adapted mechanism is foreseen to face such bad radio conditions.

A particular object of the present invention is to provide for mechanisms that enable it to fulfill service level agreements in mesh flow links even when wireless links are affected by bad radio conditions.

Another object of the invention is to provide a network node inside a mesh network adapted to support such mechanisms.

### SUMMARY OF THE INVENTION

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

These objects presented above, and others that appear below, are achieved in particular by a method for managing resource allocation in a mesh network according to claim 1, a link group coordinator according to claim 13 and a network node according to claim 14.

According to the present invention, at least one link group comprising a set of network nodes and links in between the network nodes is defined inside the mesh network. Inside the link group, an entity plays the role of link group coordinator. According to the present invention, the link group coordinator keeps track of resources used on links inside the link group. In addition, the link group coordinator sends by signaling at least one link group load parameter to the nodes of said link group. This link group load parameter is used upon overload situation in said link group by the nodes to perform overload management.

The method according to the present invention presents the advantage to consider a set of links inside a link group which share a predefined resource. This provides for a higher flexibility in case of overload situation especially due to bad radio conditions. This way, the link group coordinator, can take advantage of a larger number of links to get a more appropriate repartition of the resources for continuing fulfilling the best way possible the service level agreements.

Another advantage of the present invention consists in distributing in advance of the overload situation information which can be immediately used when the overload situation occurs. This saves reaction delay in case of suddenly appearing overload due for example to bad radio conditions.

Further advantageous features of the invention are defined in the dependent claims.

### BRIEF DESCRIPTION OF THE DRAWINGS

Other characteristics and advantages of the invention will appear on reading the following description of a preferred embodiment given by way of non-limiting illustrations, and from the accompanying drawings, in which:
- Figure 1 shows a schematic diagram of a mesh network in which the present invention can be used;
- Fig. 2 shows a schematic diagram of a link group in the mesh network of Fig. 1;
- Figure 3 shows an embodiment of a link group coordinator according to the present invention;
- Figure 4a and 4b show an embodiment of a network node according to the present invention.

### DETAILED DESCRIPTION OF THE INVENTION

The functions of the various elements shown in the Figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

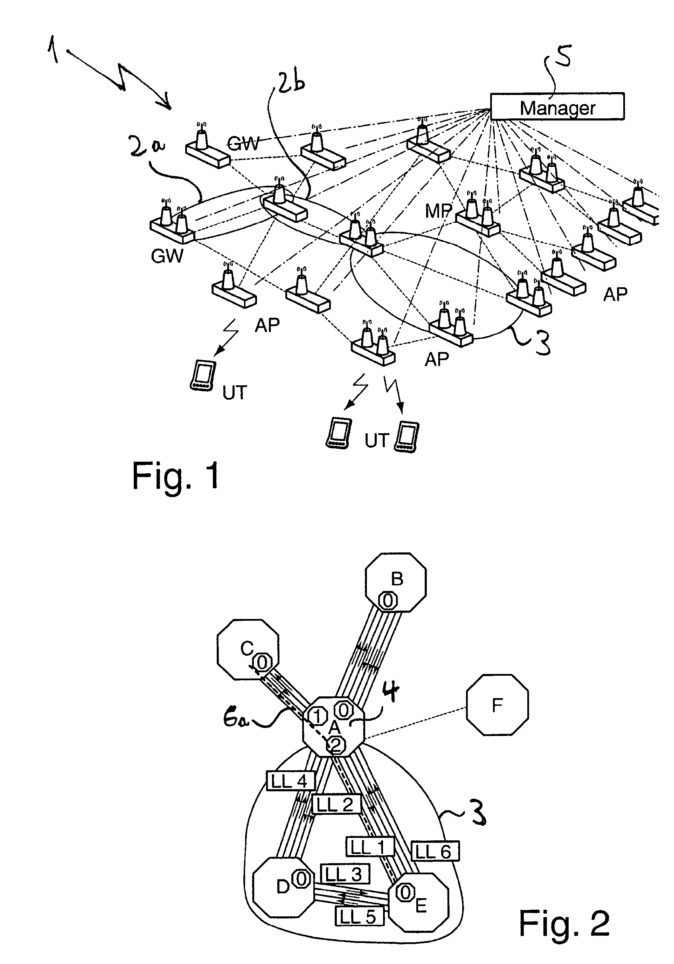

**Fig. 1** shows an example of a mesh network **1** having a plurality of mesh nodes, each node belonging to one of three different types: A first type of nodes, being designated as gateway nodes **GW** in the following, is devised for providing a connection of the wireless mesh network 1 to a packet-based core network (e.g. the Internet), the connection of the gateway nodes GW to the core network being implemented e.g. via a wire-line (cable or fiber-based) connection or via a wireless connection. A second type of nodes are devised as access points **AP** for providing connection to and exchanging information with a plurality of user terminals **UT** which may be connected to the wireless mesh network 1. The gateway nodes GW are linked to the access points AP via zero, one or more relay nodes. Relay node will in the following be referred to as mesh points **MP.**

In the framework of the present invention, solely mesh point MP functionality will be considered. It will be understood by those skilled in the art, that GW and AP also support MP functionality in addition to other functionality. Consequently, the present invention applies to the type of mesh network illustrated in figure 1 but also to much simpler mesh network architectures comprising solely mesh points MP as defined above.

Mesh network 1 may be an heterogeneous network, i.e. the nodes AP, GW, MP, UT and the links between the nodes are implemented using different link technologies, for example in compliance with the IEEE 802.1 (WiFi) and IEEE 802.16 (WiMAX) standard, respectively. Thus, some of the mesh points MP are adapted to perform communications only using a single link technology, whereas other mesh points MP are adapted for performing transmissions using both link technologies, or using twice the same link technology over two interfaces. The latter mesh points MP are represented with two antennas in Fig. 1 to illustrate this possibility.

Mesh network 1 (i.e., the multi-hop view) is preferably managed by a centralized network capacity manager **5** shown in Fig. 1, which is adapted to communicate with the mesh point MP of network 1. In the framework of the present invention, the capacity manager 5 is not mandatory and can be omitted since the present invention is solely located at link group level.

Some nodes AP, MP, GW of the mesh network 1 are connected via physical (wireless) links (one-hop links), being represented by dashed lines in Fig. 1, the links either being point-to-point links **2a, 2b** which are (mutually) realized in disjoint wireless resources or on point-to-multi-point and/or multi-point-to-multi-point link groups **3** comprising a plurality of links sharing the same resources (spectrum, time, code, etc.).

The mesh network may comprise a plurality of link groups 3, a link group being defined as a plurality of links between nodes that share the same physical resource, i.e., spectrum, time, code, etc. In other words, mesh links belonging to different link groups do not share the same physical resources unless if they are far apart enough from each other not to interfere.

An example of a link group **3** of the network 1 of Fig. 1 is shown in greater detail in **Fig. 2****.**

In the present example, the link group 3 comprises logical (i.e. directed) links **LL1** to **LL6** between a first, second and third node **A, D, E**. In Fig. 2, two further nodes C, B of the wireless mesh network 1 which do not pertain to the link group 3 are also represented, together with a further node **F** which is connected to the first node A via a physical link which does not pertain to the wireless mesh network 1.

Each link LL1 to LL6 inside the link group 3 (resp., inside the mesh) can accommodate multiple mesh flows. Mesh flows are flows of packets with a unique source and destination node and a fixed path through the mesh network 1. Thus, mesh flows are realized by combining multiple subsequent single-hop transmissions on mesh links of the mesh network 1. One such mesh flow **6a** from node C to node E is indicated in Fig. 2. Typically, however, a mesh flow is established between an ingress (access point AP or GW) and an egress (gateway node GW or AP) of the wireless mesh network 1, the mesh flow being used for transporting aggregates of user flows over the wireless mesh network 1.

In the following table (Table 1), the logical links LL1 to LL6 of the link group 3 are represented together with the identifier of the wireless interface (0, 1, or 2) of each node A, D, E on which a respective logical mesh link is installed.

**Table 1**

| Logical | Source | | Destination | |
|---|---|---|---|---|
| Link ID | Node | IF | Node | IF |
| 1 | A | 2 | E | 0 |
| 2 | A | 2 | D | 0 |
| 3 | D | 0 | E | 0 |
| 4 | D | 0 | A | 2 |
| 5 | E | 0 | D | 0 |
| 6 | E | 0 | A | 2 |

The link group 3 and further link groups are detected and configured in an initial self-configuration phase of the wireless mesh network 1, in which radio parameters, e.g., WLAN channels and OFDMA sub-channel areas, are set and mesh links 2a, 2b and link groups 3 to be used are configured. As stated above, link groups comprise links that share the same physical resource, which is locally split by MAC (medium access control) mechanisms of the wireless technologies and distributed over the different mesh links according to their need.

According to the present invention, in each link group,3 a link group coordinator 4 (in the present example, implemented in the first node A) is elected for influencing local packet handling entities and MAC entities at mesh nodes, serving as an interface to the MAC system.

Link group coordinator 4 is more generally the authority which has knowledge about the technological properties of the links inside a link group 3, and also on local environmental parameters. This knowledge may include implementation details of media access control mechanisms of the links as well as measurements of environmental properties such as the number of significant interferers.

The link group coordinator 4 gathers information from the network nodes inside the link group related to:
- physical link properties of the links of the link group, such as an overall physical resource capacity, possibly together with link state information,
- estimates for weight for each logical link (LL1 to LL6 in the present example) for a representative set of traffic types. The weights (also called production cost factors) are representing the estimated physical resource consumption rate for establishing a packet-based traffic flow on a respective one of the logical links LL1 to LL6 and are dependent on the link and on the traffic type (instead of the flow), as there is no flow established on a respective link when the estimation is performed. Thus, apart from the physical link properties of the respective mesh link such as a modulation and coding scheme, a Signal-to-Interference and Noise Ratio, a repetition mechanism overhead, a channel coding efficiency, etc., the weight is also dependent on a traffic type, resp. QoS class (Voice, Video, Best Effort, etc.) of the mesh flow to be established on a respective link LL1 to LL6, as can be easily seen from the following link group resource allocation table, also comprising information about a maximum delay time on a respective link LL1 to LL6:

**Table 2**

| QoSAlloc ID | Logical Link ID | (minimum) guaranteed Bitrate (Bit/s) | Type | weight (Hz x s/ Bit/s) M= Measured C = Calculated |
|---|---|---|---|---|
| 1 | 1 | 100000 | BE | 1.1 |
| 2 | 1 | 100000 | Voice | 1.7 |
| 3 | 2 | 200000 | Video | 1.3 |
| 4 | 2 | 200000 | BE | 2.1 |
| 5 | 3 | 115000 | BE | 1.1 |
| 6 | 4 | 120000 | Voice | 2.1 |
| 7 | 4 | 50000 | Voice | 2.2 |
| 8 | 5 | 64000 | BE | 1.1 |
| 9 | 5 | 72000 | BE | 1.7 |
| 10 | 6 | 180000 | Voice | 2.1 |

The values shown in Table 2 are a snap-shot of the state information available in the link group coordinator 4, the state information being regularly updated, e.g. when new flows are instantiated.

According to the present invention, link group coordinator 4 is keeping track of resources used on the different links inside link group 3.

Further, link group coordinator 4 signals to each node A, D, E in the link group at least one link group load parameter. The link group load parameter enables each node which faces an overload situation to handle appropriately and according to the link group load parameter(s).

Several type of signalling methods can be envisaged between link group coordinator 4 and nodes A, E, D.

A first type of signalling consists in a beaconing type of signalling. In this case, link group coordinator 4 issues at regular time intervals (for example every 5 ms) a message containing the link group load parameter(s). In this case, the same link group load parameter(s) is/are preferably received by the different node. This kind of signalling is best adapted in case a common link group parameter is broadcast to all nodes.

A second type of signalling consists in piggy backing i.e. in adding signalling information to a message containing user data sent inside a mesh flow toward a node A, D, E. In this case node specific link group load parameters can be sent specifically to the different nodes.

A third type of signalling consists in defining new signalling messages sent separately between link group coordinator and nodes A, D, E.

As well, several types of link group load parameters can be used in the framework of the present invention. In general, the function of the link group load parameter is to enable the node receiving the link group load parameter to react quickly and appropriately to an overload situation.

Such an overload situation may be primarily caused by bad radio conditions on a link inside a group link. Such bad radio conditions result in errors in the mesh flow and require retransmission of the erroneous data, resulting in increase in physical resource consumption which might overload the link group and/or increase delays of the transmissions

Another reason for overload situations owes to statistical multiplexing effects of packet traffic. Owing to the bursty nature of packet traffic an contemporary queue overflows can appear. On this occasion, decisions have to be taken which packets to displace first or whether to increase the physical resource consumption of this node in order to maintain service level agreements in an optimized way. This type of overload situation is consequently present in case of both pure wired or pure wireless links but as well for a mix of both wired and wireless links.

Having knowledge of the at least one link group overload parameter, a nodes A, D, E are in a position once detecting an overload to apply an overload resolution mechanism deemed to avoid loss of data on the one hand but also to guarantee fulfillment of QoS requirements of the link flows in case of a connection oriented QoS provision on the other hand achieving a link group-wide optimization rather than only a node-local optimization.

This all is facilitated by the fact that a pool of resources is shared by the node inside the link group. Indeed, if a link in the link group experiences overload, it is easy for the node on knowledge of the link group overload information to increase its resource consumption if such resources are still free or can possibly be freed inside the link group. Alternatively, the node can easily optimize its retransmission request strategy and especially its medium access to the corresponding link or to discontinue a data flow in case of non recoverable error.

Having said this, concrete examples of link group load parameters will be described in the following.

Firstly, a list of establish links in one link group may be an embodiment of such a group link load parameter. In the presented example table 1 may be sent to the node inside the link group by link group coordinator 4 as link group load parameter. In addition to the parameter listed in table 1 other a link level relevant service parameters may be sent in addition. This is especially applicable to packet switched oriented mesh networks supporting a per flow QoS management.

Secondly, an overall group status may be an embodiment of such a group link load parameter. This overload group status can for example be calculated as the sum over all QoS allocations at flow level in the link group showed in table 2 of the products between the corresponding guaranteed bitrate and the corresponding weight: Σ*_{i=QoS AllocationID} guaranteed bitrate(i)*weight(i).* This is especially relevant in connection oriented mesh networks supporting a per flow QoS management.

Thirdly, node specific setup parameters may be an embodiment of such group link load parameter. In this case, link group coordinator 4 performs, on his own, an overload recovery strategy and informs each node of the respective parameter the respective node has to use in case of detection of an overload situation.

For example, the content of table 2 (or a subset thereof) may be signaled by link group coordinator 4 to nodes A, E, D. Since this information is broadcast to all, a beaconing type of signaling could be best appropriate. However, any type of signaling can be used. Alternatively to the complete transmission of the content of table 2, a list of established links with their service parameter can be signaled to the nodes A, D, E.

Especially and in order to maintain agreed service levels for the mesh flows 6a, traffic conditions at mesh links 2a, 2b, LL1 to LL6 have to be kept in certain bounds (when using a DiffServ like traffic handling model at links) or resource allocations have to be installed at links 2a, 2b or within link groups 3 when using an IntServ like traffic handling model. The combination of all single-hop traffic forwardings with their properties of average bit-rate, packet delay, drop-rate, etc., make up the overall service level of a mesh flow and are considered by link group coordinator 4 in its overall recovery strategy.

Further, mesh flows have an assigned service quality, e.g., an agreed bitrate and/or an agreed end-to-end delay. It is intended to place and maintain mesh flows in the mesh network without violating capacity constraints at any link 2a, 2b or within link group 3 and without violating delay constraints. The existing constraints and service level agreements have to be met by link group coordinator when developing its overall recovery strategy.

Possible overall recovery strategies are presented in the following:
In case of distributed resource allocation on the links, as for example in a IEEE 802.11 WiFi based meshed network where a CSMA/CA type of MAC is used by all nodes, different delay to access to the medium could be determined by the link group coordinator to ensure that the node having the most constraining service parameter is given priority to access to the medium over the other nodes. In this case the link group overload parameter would consist in different MAC delay to be used in case of overload by the different nodes. This type of node specific link group load parameter would be best signaled using a piggy backing type of signaling. Again, this however does not exclude the use of other type of signaling.

More generally in a IEEE 802.11 WiFi based meshed network, all nodes in the link group implement a similar MAC functionality and select a link group coordinator out of them. This link group coordinator is in charge of communicating with the mesh management system in order to negotiate the acceptance and the service level agreements for one-hop QoS allocations in connection oriented mesh network environment. Furthermore, the link group coordinator 4 is in charge to determine the overall physical resources of the link group by measuring channel occupation time and by receiving measurement results and channel access report from other nodes of the link group. The link group coordinator is doing a bookkeeping of the currently assigned physical resources to traffic flow with a short term smoothing of these properties. This book keeping enables it to send link group load information according to the present invention to the node inside the link group.

In an alternative embodiment in case of centralized resource allocation on the links as for example in LTE or WIMAX, the link group coordinator 4 is managing wireless resources on a per-hop basis and is installing resource allocations in MAC units, e.g., installing connections in WiMAX, LTE link systems. Link group coordinator 4 has to interact with the flow forwarding units, local queuing systems for directing mesh flows to queues, and MAC units. In this case, link group coordinator 4 is responsible for influencing in its overall recovery strategy the scheduling of physical resource as well as queuing and traffic displacement for the nodes inside the link group.

For the uplink traffic from the nodes inside the link group towards the link group coordinator, link group load information previously distributed by the link group coordinator 4 according to the present invention is required and considered in order to decide which traffic to displace first in case of short term overload situations.

In a preferred embodiment of the present invention, the link group load information is distributed at predefined time intervals by the link group coordinator to the nodes inside the link group. For example a distribution of the link group load information may be performed every 5 ms.

It will be understood that still other relevant link group load information do exist and are in the scope of the present invention since they fulfill the functional requirement of the link group load parameter expressed above.

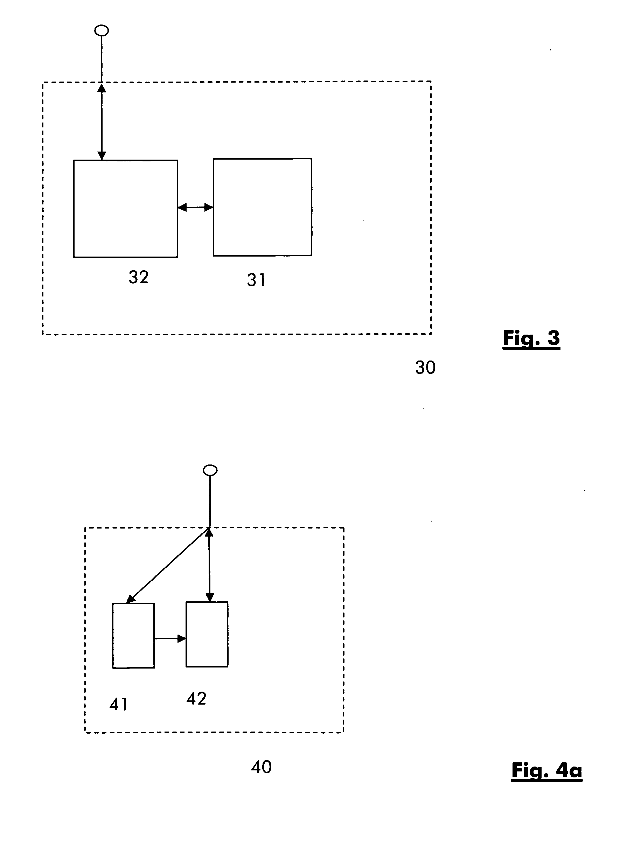

Figure 3 shows an embodiment of a link group coordinator according to the present invention. Link group coordinator 30 is adapted to be used in a mesh network preferably comprising at least partly wireless links. A link group consists in several nodes and links between said nodes and comprises means 31 for keeping track of resources used on the links inside a link group and of the QoS requirements of the link inside the link group. Link group coordinator 30 may as well be a node in the link group. Means 31 for tracking can be realized in form of an interface to get information from the nodes inside the link group as well as a memory part for example in form of a look up table to store predefined information received from the nodes.

Further link group coordinator 30 comprises means 32 for signaling to the nodes inside the link group at least one link group load parameter. Signaling means 32 may be realized in form of a beaconing system, Piggy backing system, or generator of new signaling messages. Signaling means 32 are preferably added to the usual signaling means available in prior art nodes.

Examples of link group load parameters have been given in the previous part of the description. The sake of the link group load parameters is to give enough information to the nodes to which they are destined in order to be able to react quickly in case an overload situation happens inside the link group.

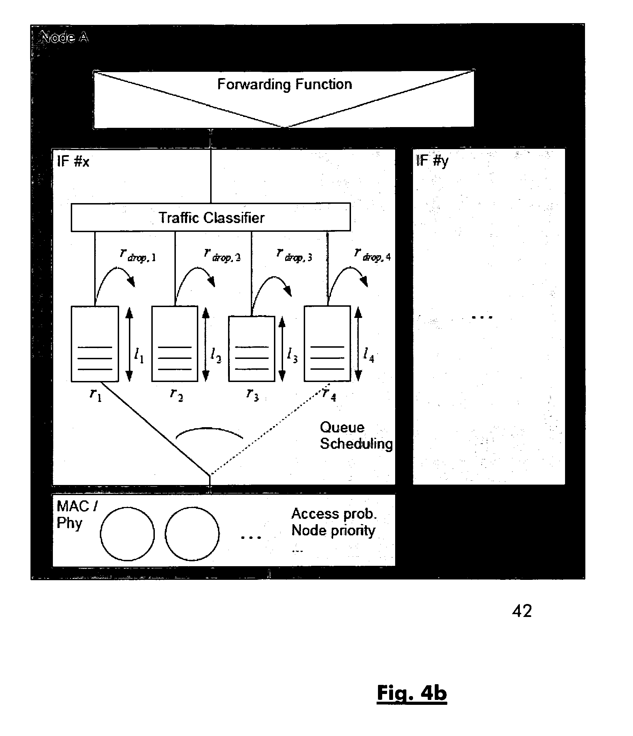

Figure 4a and 4b show an embodiment of a network node according to the present invention. Network node 40 is adapted to be used in a mesh network comprising at least partly wireless links, network node 40 being used in a mesh network infrastructure showing link groups, each link group comprising a link group coordinator which may but not necessarily must be part of a network node.

According to the present invention, network node 40 comprises means 41 for receiving at least one link group load parameter, means 41 can be implemented in form of an interface for receiving the link group load parameter(s) as well as a memory adapted to store the link group load parameter(s).

Further, network node comprises means 42 for performing overload management based on the at least one link group load parameter.

Figure 4b shows a possible implementation of such means 42 for performing overload management which comprises a forwarding module, a traffic classifier module linked to a plurality of queues for different traffic categories as well as a queue scheduling and a MAC/PHY module for accessing to the medium.

According to the present invention, the link group load parameter may be used at several level of the means 42 depending of the type of mesh network.

For example for an distributed resource allocation type mesh network as IEEE 802.11 WiFi based mesh networks, the at least one link group load parameter will preferably be used at the MAC/PHY level (for example to configure the distribution of interframe spaces to vary the channel access probability of the node).

Alternatively, for a centralized resource allocation type based mesh network as a WIMAX or LTE network, the link group load parameter may be preferably used at the traffic classifier of queue scheduling module.

## Claims

1. Method for managing resource allocation in a mesh network (1) comprising nodes (GW, MP, AP) and links (2a, 2b, 3) between said nodes (GW, MP, AP), preferably at least a part of said links being wireless links, said mesh network comprising at least one link group (3) comprising links between a predefined set of nodes, one node of said link group acting as link group coordinator (4), said method comprising the step of:
- keeping track at said link group coordinator (4) of resources used on said links inside said link group;
- signalling by said link group coordinator (4) to said nodes inside said link group at least one link group load parameter;
- upon overload situation in said group link, performing overload management by said nodes based on said at least one link group load parameter.

2. Method according to claim 1, wherein said signalling is based on beaconing, or on piggy backing or on a dedicated signalling message

3. Method according to claim 1, wherein said at least one link group load parameter consists in an overall group state parameter

4. Method according to claim 1, wherein said at least one link group load parameter consists in a list of established links in said link group together with their respective service parameters.

5. Method according to claim 1, wherein said at least one link group load parameter consists in a list of establish data flows in said link group together with their respective service parameters and/or QoS requirements.

6. Method according to claim 1, wherein said at least one link group parameter consists in node specific setup parameters.

7. Method according to claim 1, wherein said at least one link group parameter is taken into account by said node to configure its medium access to a link.

8. Method according to claim 1, wherein said at least one link group parameter is taken into account to prioritize certain type of data flow in said node.

9. Method according to claim 1, wherein said link group parameter is taken into account to discontinue a data flow on a link in said node.

10. Method according to claim 1, wherein said overload situation is caused by bad radio conditions on said links of said group link.

11. Method according to claim 1, wherein said overload situation is caused by temporary overload situations owing to statistical multiplexing effects of packet traffic.

12. Method according to claim 1, wherein medium access control mechanisms are used for managing resources in said link group, said medium access control mechanisms being either controlled by said nodes individually, or centralized at said link group coordinator.

13. Link group coordinator (4) adapted to be used in a mesh network (1), preferably comprising at least partly wireless links, said link group coordinator (4) overseeing a link group comprising a predefined set of nodes and links between said nodes, said link group coordinator comprising:
- means (31) for keeping track of resources used in said links inside said link group and of said;
- means (32) for signalling to said nodes inside said link group at least one link group load parameter; said link group load parameter being adapted to be used by said nodes in case of overload situation to perform overload management.

14. Network Node (40) adapted to be used in a mesh network (1), preferably comprising at least partly wireless links, said node belonging to a link group comprising links between a predefined set of nodes, a second node of said link group acting as link group coordinator (4), said node comprising:
- means (41) for receiving at least one link group load parameter from said link group coordinator;
- means (42) for performing overload management based on said at least one link group load parameter upon overload situation in said group link.

15. Mesh network comprising network nodes according to claim 14, group link coordinator according to claim 13.
